# EUROPÄISCHE PATENTSCHRIFT

(11) **EP 1 163 982 B1**
(45) Veröffentlichungstag und Bekanntmachung des Hinweises auf die Patenterteilung: **11.04.2007**
(21) Anmeldenummer: 01810543.7
(22) Anmeldetag: 05.06.2001
(51) Int. Cl.: B25F 5/00, B25F 5/02, B23B 49/00

(54) **Tiefenanschlag für Handwerkzeuggeräte**
Depth stop for hand-held power tool
Butée de profondeur pour outil à main motorisé

(30) Priorität: 14.06.2000 DE 10029134
(43) Veröffentlichungstag der Anmeldung: 19.12.2001
(73) Patentinhaber: HILTI Aktiengesellschaft, 9494 Schaan (LI)
(72) Erfinder: Wissmach, Walter, 80637 München (DE); Bongers-Ambrosius, Hans-Werner, 81477 München (DE); Kristen, Ferdinand, 82205 Gilching (DE)
(74) Vertreter: Wildi, Roland

(56) Entgegenhaltungen:
- WO-A-86/03314
- US-A- 4 717 291
- US-A- 5 690 451

## Beschreibung

Die Erfindung bezeichnet einen Tiefenanschlag für drehende oder schlagende Handwerkzeuggeräte, wie Handbohrmaschinen oder Bohrhämmer, zur abrasiven Erstellung von Sacklöchern, insbesondere in Gestein, zur Aufnahme von Befestigungselementen sowie ein zugeordnetes Verfahren zu dessen Einstellung.

In vielen Anwendungsfällen müssen Sacklöcher eine genau festgelegte Tiefe aufweisen, bspw. um eine optimale Verankerung eines später darin platzierten Befestigungselements zu gewährleisten. Dazu muss der abrasive Materialabtrag am Grund der Bohrung ab einer bestimmten Eindringtiefe unterbunden werden.

Die Erstellung von Sacklöchern bestimmter Tiefe kann sowohl durch eine Beendigung der drehenden oder schlagenden Bewegung als auch der Vorschubkraft erfolgen, wobei letztere auch über einen Tiefenanschlag auf eine andere Stelle des Werkstücks umgeleitet werden kann.

Nach der US4890779 werden spezielle Setzwerkzeuge in die Werkzeugaufnahme der Handwerkzeuggeräte eingesetzt, welche einen Tiefenanschlag aufweisen. Nachteilig bei derartigen Setzwerkzeugen ist ihre Spezialisierung auf einen oder mehrere wenige, diskrete Anwendungsfälle.

Ein Tiefenanschlag für Bohrhämmer ist nach der US3633682 als längs der Werkzeugachse verschiebbarer und fixierbarer druckstabiler Stab ausgeführt, welcher vorzugsweise am Zusatzhandgriff befestigt ist. Der mechanische Kontakt mit dem Werkstück, meist eine Wand, verhindert einfach und effektiv ein weiteres Eindringen des Werkzeugs über die am Tiefenanschlag voreingestellte Tiefe hinaus. Nachteilig ist die manuelle Einstellung des Tiefeneinschlags und die damit verbundene Fehlermöglichkeit.

Nach der US4436460 wird zum Ausbohren von Zylindern die Position eines Werkzeugs relativ zur Oberfläche gemessen und ausgewertet. Diese gestellgebundene Spezialanwendung ist nicht bei Handwerkzeuggeräten anwendbar.

Nach der US4717291 wird bei einem Handwerkzeuggerät ein längs der Werkzeugachse beweglicher, nichtrotierender hülsenförmiger Anschlag über eine motorgesteuerte Tiefenkontrolleinheit mit einem Gewindegetriebe entsprechend der gemessenen Werkzeuglänge eingestellt. Der mechanische Kontakt mit dem restlichen Werkstück unterbricht den Eindringvorgang. Bei einer derartigen Lösung ist insbesondere die das Werkzeug umgebende Hülsenform des Anschlags und die erforderliche Grösse des Gewindegetriebes nachteilig.

Zudem sind aus der W08603314 Barkodeetiketten zur Identifikation, aus der WO86/02186 passive Folienschwingkreise zur Identifikation sowie aus der WO89/05984 fremdgespeiste aktive Transponder zur Identifikation, Beantwortung von Fragen und Speicherung von Daten bekannt, welche einfach in hohen Stückzahlen herstellbar mit Massenprodukten verbunden werden können.

Die Aufgabe der Erfindung besteht in einem Tiefenanschlag für ein Handwerkzeuggerät, welcher beim Bohren von Sacklöchern zur Aufnahme eines Befestigungselementes die Bohrungstiefe auf einen, dem Befestigungselement zugeordneten, Wert begrenzt.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist der Tiefenanschlag für ein Handwerkzeuggerät eine, die Anschlaglänge seines parallel zur Werkzeugachse des Handwerkzeuggerätes begrenzt beweglich gelagerten Stabes verstellende, von einer Energiequelle gespeiste Motorsteuereinheit auf, welche über einen Mikrocontroller, der mit einer Sende/Empfangseinheit verbunden ist und die Identifikation eines Identifikationsmittels berührungslos einliest, wobei die Sende/Empfangseinheit mit dem in Übertragungsreichweite befindlichen Befestigungselement verbunden ist, die adaptiv den Tiefenanschlag auf eine, dem Befestigungselement zugeordnete und von einem, mit dem Mikrocontroller verbundenen, Längensensor am Stab gemessene, Anschlagslänge einstellt und somit die Bohrungstiefe auf diesen begrenzt.

Die Motorsteuereinheit ist vorteilhaft ein Schrittmotor, welcher über ein Schneckenrad in eine Zahnstange eingreift, welche Teil eines den Anschlag bildenden Stabes ist.

Die Längensensoren sind vorteilhaft als absolut wertgebende oder inkrementierende Magnetsensoren für die Anschlaglänge ausgeführt und dem über Magnetstreifen bezüglich seiner Anschlagslänge bestimmbaren Stab messbar zugeordnet.

Vorteilhaft beinhaltet das Identifikationsmittel, bspw. ein an oder in dem Befestigungselement an einer unwesentlicher Position befestigten, kleinen Barkode, Folienschwingkreis oder Transponder, neben der Information zur Bohrungstiefe noch weitere Daten wie den zugeordneten Bohrlochdurchmesser, die Länge des Bohrers oder die Art des Bohrers, welche weiter vorteilhaft auf einem von dem Mikrocontroller gesteuerten und sichtbar auf einem die Sende/Empfangseinheit und den Mikrocontroller beinhaltenden Gehäuse angeordneten Display darstellbar sind.

Die Sende/Empfangseinheit ist je nach Identifikationsmittel ein Laserscanner/Lichtempfänger, ein frequenzveränderlicher Radiosender/Radioempfänger oder ein trägerfrequenzmodulierter Radiosender/Radioempfänger.

Vorteilhaft wird der Tiefenanschlag nahe der Werkzeugaufnahme eines Handwerkzeuggerätes befestigt und ist weiter vorteilhaft über das Befestigungselement eines Zusatzhandgriffs an dem Handwerkzeuggerät befestigbar.

Vorteilhaft ist der Tiefenanschlag zur Stromversorgung über Schleif- bzw. Steckkontakte im Bereich der Befestigung des Tiefenanschlags nahe der Werkzeugaufnahme oder eine flexible Leitung mit einer Steckverbindung zu einer im Handwerkzeuggerät integrierten Energiequelle verbindbar.

Die Energiequelle kann alternativ vorteilhaft eine Batterie, ein Akkumulator oder ein Speicherkondensator sein, welcher weiter vorteilhaft im Zusatzhandgriff integriert ist.

Vorteilhaft kann die als Akkumulator oder Speicherkondensator ausgeführte Energiequelle über Stromrichter mit einer Spule verbunden sein, welche als Sekundärwicklung eines Transformators vom magnetischen Fluss einer als Primärwicklung wirkenden Spule des Elektroantriebs, bspw. der Statorwicklung, durchsetzt ist, wodurch bei zweckentsprechender Benutzung stets eine Energieversorgung des Tiefenanschlags gewährleistet ist.

Die Erfindung wird bezüglich eines vorteilhaften Ausführungsbeispiels näher erläutert mit:

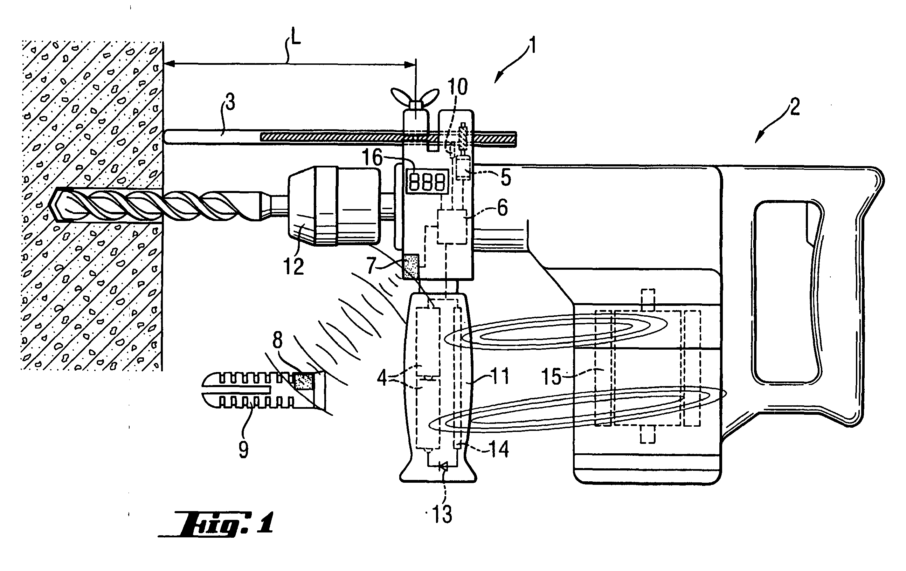

Fig. 1 als Tiefenanschlag für ein Handwerkzeuggerät.

Nach Fig. 1 weist der Tiefenanschlag 1 für ein Handwerkzeuggerät 2 eine, die Anschlaglänge L seines parallel zu einer Werkzeugachse A des Handwerkzeuggerätes 2 begrenzt beweglich gelagerten druckstabilen Stabes 3 verstellende, von einer Energiequelle 4 gespeiste, als Schrittmotor mit in die Zahnstange des Stabes 3 eingreifendem Schneckenrad ausgeführte, Motorsteuereinheit 5 auf, welcher über einen Mikrocontroller 6, der mit einem als frequenzveränderlicher Radiosender/Radioempfänger ausgeführten Sende/Empfangseinheit 7 verbunden ist und die Identifikation eines als Folienschwingkreis ausgeführten Identifikationsmittels 8 einliest, welches mit einem in Übertragungsreichweite befindlichen Dübel als Befestigungselement 9 verbunden ist, wobei ein mit dem Mikrocontroller 6 verbundener, als inkrementierender Magnetsensor ausgeführter, Längensensor 10 messbar dem Stab 3 zugeordnet ist. Der Tiefenanschlag 1 ist über das Befestigungselement eines Zusatzhandgriffs 11 nahe der Werkzeugaufnahme 12 des Handwerkzeuggerätes 2 befestigt. Der Zusatzhandgriff integriert einen Speicherkondensator als Energiequelle 4, welche über einen Stromrichter 13 mit einer Spule 14 verbunden ist, welche als Sekundärwicklung eines Transformators vom magnetischen Fluss einer als Primärwicklung wirkenden Statorwicklung eines Elektroantriebs des Handwerkzeuggerätes 2 als Erregerspule 15 durchsetzt ist. Auf dem Gehäuse des Tiefenanschlag 1 ist ein mit dem Mikrokontroller 6 verbundenes Display 16 zur Darstellung weiterer Identifikationsdaten sichtbar angeordnet.

## Patentansprüche

1. Tiefenanschlag zur Festlegung der Tiefe eines mittels eines Handwerkzeuggerätes (2) erzeugbaren Sackloches, wobei ein bezüglich einer Anschlaglänge (L) begrenzt beweglich gelagerter Element (3) parallel zu einer Werkzeugachse (A) des Handwerkzeuggerätes (2) verstellbar ist, dem Element eine von einer Energiequelle (4) gespeiste Motorsteuereinheit (5) zugeordnet ist, welche mit einem Mikrocontroller (6) verbunden ist, **dadurch gekennzeichnet, dass** der Element (3) als druckstabiler Stab ausgebildet ist, und der Mikrocontroller (6) mit einem Längensensor (10) und einer Sende/Empfangseinheit (7) verbunden ist, über welche die Identifikation eines Identifikationsmittels (8) berührungsloseinlesbar ist, welches, mit einem in Übertragungsreichweite befindlichen Befestigungselement (9) verbunden ist, und über den Mikrocontroller (6) und die Motorsteuereinheit (5) die einem in das Sackloch einzusetzendem Befestigungselement (9) zugeordnete Anschlagslänge (L) adaptiv einstellbar ist.

2. Tiefenanschlag nach Anspruch 1, **dadurch gekennzeichnet, dass** die Sende/Empfangseinheit (7) ein Laserscanner/Lichtempfänger, ein frequenzveränderlicher Radiosender/Radioempfänger oder ein trägerfrequenzmodulierter Radiosender/Radioempfänger und das Identifikationsmittels (8) ein lesbar zugeordneter Barkode, Folienschwingkreis oder Transponder ist.

3. Tiefenanschlag nach Anspruch 1 oder Anspruch 2, **dadurch gekennzeichnet, dass** der Tiefenanschlag mit einem Zusatzhandgriff (11) verbunden ist.

4. Tiefenanschlag nach einem der vorherigen Ansprüche, **dadurch gekennzeichnet, dass** auf einem Gehäuse ein mit dem Mikrokontroller (6) verbundenes Display (16) sichtbar angeordnet ist.

5. Tiefenanschlag nach einem der vorherigen Ansprüche, **dadurch gekennzeichnet, dass** die im Handwerkzeuggerät (2) angeordnete Energiequelle (4) über leitende Kontakte und/oder Leitungen mit dem Tiefenanschlag verbunden sind.

6. Tiefenanschlag nach Anspruch 4, **dadurch gekennzeichnet, dass** die Energiequelle (4) im Tiefenanschlag integriert ist.

7. Tiefenanschlag nach Anspruch 6, **dadurch gekennzeichnet, dass** die Energiequelle (4) im Zusatzhandgriff (11) integriert ist.

8. Tiefenanschlag nach einem der vorherigen Ansprüche, **dadurch gekennzeichnet, dass** der Energiequelle (4) über Stromrichter leitend eine Spule (14) zugeordnet ist, welche vom magnetischen Fluss einer Erregerspule (15) des Handwerkzeuggerätes (2) durchsetzbar ist.

9. Befestigungselement zur zweckentsprechenden Benutzung innerhalb eines mittels eines Handwerkzeuggerätes (2) erzeugbaren Sackloches, **dadurch gekennzeichnet, dass** das Befestigungselement ein zur Identifikation der Bohrungstiefe durch einen Tiefenanschlag (1) nach einem der vorherigen Ansprüche ausgestaltetes Identifikationsmittels (8) beinhaltet, welches optional ein aufgebrachter Barkode oder ein Folienschwingkreis oder ein Transponder ist.

10. Verfahren zur Steuerung eines Tiefenanschlags für ein Handwerkzeuggerät (2) nach einem der vorhergehenden Ansprüche, **dadurch gekennzeichnet, dass**
• in einem ersten Schritt berührungslos eine Identifikation eines Befestigungselements (9) eingelesen wird und
• in einem letzten Schritt die dem Befestigungselement (9) zugeordnete Anschlagslänge (L) adaptiv eingestellt wird.

## Claims

1. Depth stop gauge abutment for determining the depth of a blind hole that can be produced by means of an implement (2), whereby an element (3), which can move to a limited extent in relation to a stop length (L), can shift parallel to a tool axis (A) of the implement (2), and whereby the element has a motor control unit (5), which is supplied with energy from an energy source (4), associated with it, the said motor modulator unit (5) being connected to a micro-controller (6), **characterized in that** the element (3) is formed as a pressure-stable rod, and the micro-controller (6) is connected to a length sensor (1) and a transceiver unit (7) by means of which the identification of an identification means (8) can be read in without contact, the said identification means (8) being connected to an attachment element (9) that is located in the transmission range, and **in that** the stop length (L) associated with the attachment element (9) to be inserted into the blind hole can be adaptively adjusted by means of the micro-controller (6) and the motor modulator unit (5).

2. Depth stop gauge in accordance with claim 1, **characterized in that** the transceiver unit (7) is a laser scanner/light receiver, a variable frequency radio transmitter/radio receiver or a carrier frequency-modulated radio transmitter/radio receiver and the identification means (8) is an associated, readable, barcode, foil oscillatory circuit or transponder.

3. Depth stop gauge in accordance with claims 1 or 2, **characterized in that** the depth stop gauge is connected to a supplementary handle (11).

4. Depth stop gauge in accordance with one of the above claims, **characterized in that** a display means (16) connected to the micro-controller (6) is visibly disposed on a housing.

5. Depth stop gauge in accordance with one of the above claims, **characterized in that** the energy source (4) disposed in the instrument (2) is connected to the depth stop gauge by means of conductive contacts and/or wires.

6. Depth stop gauge in accordance with claim 4, **characterized in that** the energy source is built into the depth stop gauge.

7. Depth stop gauge in accordance with claim 6, **characterized in that** the energy source (4) is built into the supplementary handle (11).

8. Depth stop gauge in accordance with one of the above claims, **characterized in that** the energy source (4) has a coil (14), conducting as a rectifier, associated with it, magnetic flux of an exciter coil (15), of the implement, being able to pass through the said coil (14).

9. Attachment element for appropriate use inside a blind hole that can be produced by means of an implement (2), **characterized in that** the attachment element contains an identification means (8) for identifying the depth of the drill hole by means of a depth stop gauge (1) in accordance with one of the preceding claims, it being possible for the said identification means (8) to optionally be an applied barcode, a foil oscillatory circuit or a transponder.

10. Process for controlling a depth stop gauge for an implement (2) in accordance with one of the preceding claims, **characterized in that**
- in a first stage, identification of an attachment means (9) is read in, contact-free and
- in a final stage, the stop gauge length (L) associated with the attachment element (9) is adaptively adjusted.

## Revendications

1. Butée de profondeur pour définir la profondeur d'un trou borgne réalisable au moyen d'un outil à main (2), un élément (3) monté avec une mobilité limitée par rapport à une longueur de butée (L) étant déplaçable parallèlement à un axe d'outil (A) de l'outil à main (2), élément auquel est associé un module de commande motorisé (5) qui est alimenté par une source d'énergie (4) et qui est relié à un micro-contrôleur (6), **caractérisée en ce que** l'élément (3) est conformé en barre stable en pression, le micro-contrôleur (6) est relié à un capteur de longueur (10) et à un module d'émission/réception (7) permettant de lire sans contact l'identification d'un moyen d'identification (8) relié à un élément de fixation (9) situé à portée de transmission, et le micro-contrôleur (6) et le module de commande motorisé (5) permettent de régler de manière adaptative la longueur de butée (L) associée à un élément de fixation (9) à insérer dans le trou borgne.

2. Butée de profondeur selon la revendication 1, **caractérisée en ce que** le module d'émission/réception (7) est un scanner laser/récepteur de lumière, un radioémetteur/radiorécepteur à fréquence variable ou un radioémetteur/radiorécepteur à fréquence porteuse modulée, et le moyen d'identification (8) est un code-barres associé de manière lisible, un circuit oscillant sur feuille ou un transpondeur.

3. Butée de profondeur selon la revendication 1 ou 2, **caractérisée en ce que** la butée de profondeur est reliée à une poignée supplémentaire (11).

4. Butée de profondeur selon une des revendications précédentes, **caractérisée en ce qu'**un affichage (16) relié au micro-contrôleur (6) est disposé de manière visible sur un carter.

5. Butée de profondeur selon une des revendications précédentes, **caractérisée en ce que** la source d'énergie (4) disposée dans l'outil à main (2) est reliée à la butée de profondeur par l'intermédiaire de contacts conducteurs et/ou de lignes.

6. Butée de profondeur selon la revendication 4, **caractérisée en ce que** la source d'énergie (4) est intégrée à la butée de profondeur.

7. Butée de profondeur selon la revendication 6, **caractérisée en ce que** la source d'énergie (4) est intégrée à la poignée supplémentaire (11).

8. Butée de profondeur selon une des revendications précédentes, **caractérisée en ce qu'**une bobine (14) pouvant être traversée par le flux magnétique d'une bobine d'excitation (15) de l'outil à main (2) est associée à la source d'énergie (4) de manière conductrice par l'intermédiaire de convertisseurs de puissance.

9. Élément de fixation pour utilisation normale à l'intérieur d'un trou borgne réalisable au moyen d'un outil à main (2), **caractérisé en ce que** l'élément de fixation contient un moyen d'identification (8) qui est conçu pour identifier la profondeur de forage à l'aide d'une butée de profondeur (1) selon une des revendications précédentes et qui est optionnellement un code-barres rapporté ou un circuit oscillant sur feuille ou un transpondeur.

10. Procédé de commande d'une butée de profondeur pour un outil à main (2) selon une des revendications précédentes, **caractérisé en ce que**, dans une première étape, une identification d'un élément de fixation (9) est lue sans contact et, dans une dernière étape, la longueur de butée (L) associée à l'élément de fixation (9) est réglée de manière adaptative.
